(19) Europäisches Patentamt
European Patent Office
Office européen des brevets

(11) **EP 1 989 514 B1**

(12) **EUROPÄISCHE PATENTSCHRIFT**

(45) Veröffentlichungstag und Bekanntmachung des Hinweises auf die Patenterteilung:
**04.05.2011 Patentblatt 2011/18**

(21) Anmeldenummer: **07701348.0**

(22) Anmeldetag: **02.03.2007**

(51) Int Cl.:
***G01D 5/20*** *(2006.01)*

(86) Internationale Anmeldenummer:
**PCT/AT2007/000107**

(87) Internationale Veröffentlichungsnummer:
**WO 2007/098522 (07.09.2007 Gazette 2007/36)**

(54) **VORRICHTUNG ZUR MESSUNG DER RELATIVLAGE ZWEIER TEILE**

APPARATUS FOR MEASURING THE RELATIVE POSITION OF TWO PARTS

DISPOSITIF POUR MESURER LES POSITIONS RELATIVES DE DEUX PIECES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **02.03.2006 AT 1552006 U**

(43) Veröffentlichungstag der Anmeldung:
**12.11.2008 Patentblatt 2008/46**

(73) Patentinhaber: **Magna Steyr Fahrzeugtechnik AG & Co. KG**
**8041 Graz (AT)**

(72) Erfinder: **KRAMMER, Gert**
**A-8042 Graz (AT)**

(74) Vertreter: **Harringer, Thomas et al**
**Magna International Europe AG**
**Patentabteilung**
**Dr. Aunerstrasse 21**
**4. OG / Ost**
**8074 Raaba (AT)**

(56) Entgegenhaltungen:
DE-A1- 2 211 359     DE-A1- 4 141 545
DE-A1- 19 913 869     DE-B- 1 108 449
US-A- 5 497 804

**Beschreibung**

Die vorliegende Erfindung betrifft eine Vorrichtung zur Messung der Relativlage zweier Teile, mit einer verformbaren Spule, die mit beiden Teilen in Verbindung steht und sich entsprechend deren Relativlage verformt, wobei die Induktivität der Spule formabhängig und damit ein Maß für die Relativlage ist.

Derartige Vorrichtungen sind aus der DE 11 08 449, DE 32 05 705, DE 41 41 545 oder DE 199 13 869 bekannt. Die Induktivität der Spule wird beispielsweise als frequenzbestimmender Teil eines Schwingkreises eingesetzt, dessen Frequenz gemessen wird und für die Relativlage der Teile repräsentativ ist; Relativbewegungen der Teile können in weiterer Folge aus der zeitlichen Änderung der Relativlage ermittelt werden.

Bei allen bekannten Vorrichtung wird die Spule durch eine oder zwei konzentrische oder parallele Schraubenfedern gebildet, die einfache gerade Luftspulen darstellen. Solche Luftspulen haben die Eigenschaft, daß sich ihre magnetischen Flußlinien außerhalb der Luftspule schließen. Mit anderen Worten treten die magnetischen Flußlinien an den Enden der Schraubenfedern aus und bilden ein Streufeld in der Umgebung. Auch bei den bekannten Ausführungsformen mit zwei konzentrischen oder parallelen Schraubenfedern wirken beide Schraubenfedern als offene Luftspulen mit entsprechendem Streufeld.

Das Auftreten dieses Streufeldes hat schwer zu berücksichtigende Auswirkungen auf die Proportionalität zwischen Formänderung und Induktivitätsänderung der Spule. Beispielsweise berechnet sich die Induktivität L einer zylinderwendelförmigen Spule zu

$$L = k \cdot \mu_r \cdot \mu_0 \frac{A \cdot N^2}{l} \qquad\qquad (1)$$

mit

k.........Entmagnetisierungsfaktor
$\mu_r$......relative Permeabilität
$\mu_0$ ...... Permeabilität
A.........Querschnittsfläche der Wicklung
N.........Windungszahl der Wicklung
l.........Länge der Wicklung

Die Induktivität L ist damit im wesentlichen indirekt proportional zur Länge l der Wicklung, z.B. der aktuellen Dehnung oder Stauchung einer als Spule eingesetzten Zug- oder Druckfeder. Der Streufeldanteil der Spule findet dabei seinen Niederschlag in dem Entmagnetisierungsfaktor k, welcher durch die Einkopplung äußerer elektromagnetischer Einflüsse, von der Permeabilität des Mediums (Luft) außerhalb der Spule und nicht zuletzt durch Baugruppen in der Umgebung der Spule in schwer berechenbarem Maße beeinflußt wird. Darüber hinaus bedeutet das Auftreten des Streufeldes auch die Abstrahlung störender elektromagnetischer Wellen in die Umgebung.

Die Erfindung setzt sich zum Ziel, die Nachteile der bekannten Konstruktionen zu überwinden und eine Meßvorrichtung mit verbesserter Meßgenauigkeit, -reproduzierbarkeit und -störungsunanfälligkeit bei möglichst einfachem Aufbau zu schaffen.

Dieses Ziel wird mit einer Vorrichtung der einleitend genannten Art erreicht, die sich gemäß der Erfindung dadurch auszeichnet, daß die Spule über einen ringspulenartig geschlossenen Magnetkreis verfügt.

Die Erfindung beruht auf der Erkenntnis, daß durch den Einsatz einer Ringspule bzw. einer ringspulenartig geschlossenen Spulenkonstruktion das Auftreten eines die Messung unvorhersehbar beeinflussenden Streufeldes verhindert werden kann. Die Beziehung zwischen Induktivität und Formänderung der Spule kann dadurch soweit linearisiert werden, daß äußere Einflüsse weitgehend vernachlässigbar sind. Die Meßgenauigkeit der Vorrichtung der Erfindung ist wesentlich höher als jene der bekannten Konstruktionen und weitgehend unabhängig von störenden Umwelteinflüssen. Darüber hinaus wird die Abstrahlung von Störfeldern in die Umgebung, z.B. auf umliegende Baugruppen, wesentlich reduziert.

Gemäß einer ersten vorteilhaften Ausführungsform der Erfindung ist die Spule eine Ringspule. Bei einer idealen Ringspule ist der Entmagnetisierungsfaktor k = 1 und damit vernachlässigbar. Es ist zu beachten, daß in der vorliegenden Beschreibung unter dem Begriff "Ringspule" nicht notwendigerweise eine kreisringförmige Ringspule verstanden wird, sondern beispielsweise auch Ringspulen mit ellipsenförmigem oder allgemein ovalem Verlauf. Auch ist die Annäherung einer Ringspule durch einen Polygonzug aus geraden Spulenabschnitten möglich, welche einen ringspulenartig geschlossenen Magnetkreis bilden.

Eine fertigungstechnisch besonders günstige Ausführungsform besteht darin, daß die Spule - wie an sich aus der DE 41 41 545 bekannt - durch zwei parallele Schraubenfedern gebildet ist, die gemäß der vorliegenden Erfindung an ihren Enden jeweils über eine Brücke aus magnetisch leitendem Material zu dem geschlossenen Magnetkreis verbunden sind. Die Brücken verhindern das Austreten eines Streufeldes an den Enden der Schraubenfedern, da sie diese zu einem ringspulenartig geschlossenen Magnetkreis ergänzen. Dabei ergibt sich der weitere Vorteil, daß der Einsatz von parallelen geraden Schraubenfedern, wenn diese ausschließlich in ihrer Längserstreckungsrichtung verformt werden, die Verwendung der genannten Proportionalität gemäß Gleichung (1) ermöglichen.

Bevorzugt sind die Enden der Spule mit Befestigungselementen zur Verankerung an den genannten Teilen ausgestattet.

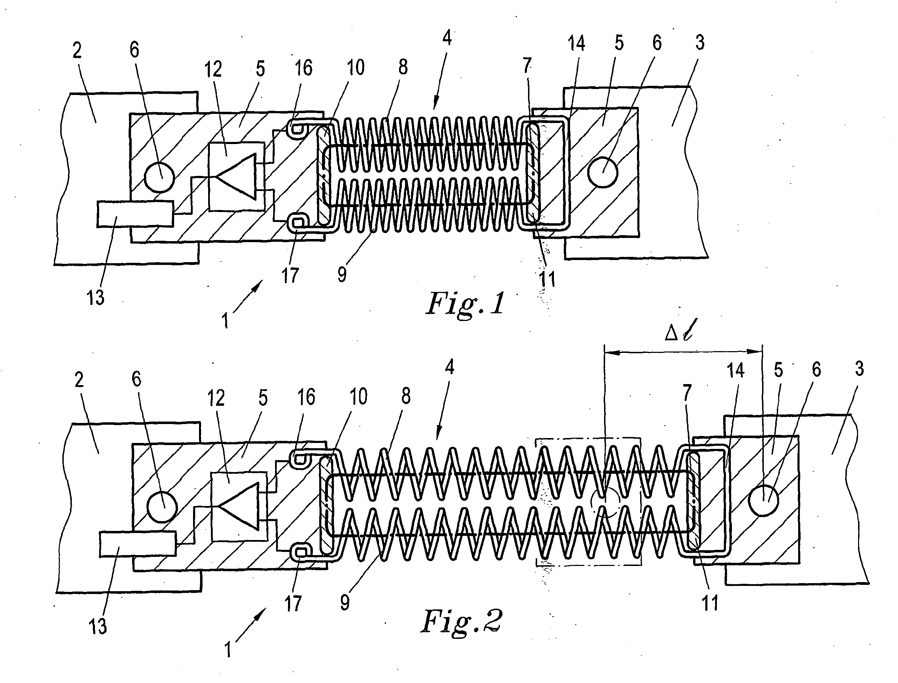

Die Erfindung wird nachstehend anhand von in den Zeichnungen dargestellten Ausführungsbeispielen näher erläutert. In den Zeichnungen zeigen die Fig. 1 und 2 die Vorrichtung der Erfindung schematisch in der Draufsicht in zwei verschiedenen Betriebsstellungen.

Fig. 1 zeigt eine Vorrichtung 1 zur Messung der Relativlage zweier Teile 2, 3, welche nur ausschnittsweise dargestellt sind. Der Begriff "Relativlage" umfaßt sowohl den Abstand, den Verdrehwinkel als auch einen allfälligen Querversatz der Teile 2, 3. Eine Auswertung der Änderungen der Relativlage ermöglicht auch die Messung von Relativbewegungen der Teile 2, 3 und in weiterer Folge von Relativgeschwindigkeiten, Relativbeschleunigungen, Relativbewegungsbahnen usw., wie dem Fachmann geläufig.

Die Vorrichtung 1 weist eine verformbare Spule 4 auf, die auf zwei gegenüberliegenden Seiten jeweils mit einem der Teile 2, 3 in Verbindung steht, genauer über Befestigungselemente 5 mit Bohrungen 6 zur Verankerung an den Teilen 2, 3.

Die Spule 4 verfügt über einen ringspulenartig geschlossenen Magnetkreis 7. Zu diesem Zweck kann die Spule 4 entweder eine Ringspule (Toroid) sein, bei welcher Spulenart alle magnetischen Feldlinien im Inneren der Spule verlaufen. Alternativ werden als Spule 4 zwei parallele Schraubenfedern 8, 9 eingesetzt, die jeweils für sich betrachtet in der Art einer offenen Luftspule wirken, jedoch an ihren Enden jeweils über eine Brükke 10, 11 aus magnetisch leitendem Material zu dem geschlossenen Magnetkreis 7 verbunden sind.

Unter "magnetisch leitendem Material" wird jedes in der Technik bekannte hochpermeable Material verstanden, wie Eisen oder beliebig andere ferromagnetische Materialien, deren relative Permeabilität $\mu_r$ im Vergleich zu Luft ($\mu_r$ = 1) groß ist; beispielsweise liegt die relative Permeabilität $\mu_r$ von Eisen im Bereich von 2000 bis 5000. Die magnetische Leitfähigkeit der Brücken 10, 11 ist somit bevorzugt drei bis vier Größenordnungen höher als jene der Schraubenfedern 8, 9, sodaß sie praktisch einen magnetischen Kurzschluß an den Enden der Schraubenfedern 8, 9 darstellen. Dies hat auch den Vorteil, daß die Geometrie an den Enden der Schraubenfedern 8, 9, insbesondere die genaue Form und Lage der Brücken 10, 11, weitgehend vernachlässigbar ist und die Induktivität L der Spule 4 praktisch nur von der aktuellen Verformung der Schraubenfedern 8, 9 abhängt.

Der aktuelle Wert der Induktivität L der Spule 4 wird mit Hilfe eines elektronischen Schaltkreises 12 ermittelt, der daraus unter Verwendung von Gleichung (1) und gegebenenfalls entsprechender Kalibrier- und Korrektur-Kennfelder die aktuelle Relativlage der Teile 2, 3 bestimmt, wie dem Fachmann bekannt.

Beispielsweise kann der Schaltkreis 12 einen Schwingkreis enthalten, dessen induktiver Bestandteil durch die Spule 4 gebildet wird und aus dessen Schwingkreisfrequenz die Induktivität L und damit die Relativlage ermittelt werden. Der Meßwert der Relativlage wird von dem Schaltkreis 12 an einem entsprechenden Anschlußport 13 zur Verfügung gestellt.

Es ist auch möglich, daß für mehrere Vorrichtungen 1 bzw. mehrere Spulen 4 ein gemeinsamer auswertender Schaltkreis 12 vorgesehen ist.

Die Schraubenfedern 8, 9 können zwei gesonderte Schraubenfedern sein, die über eine Verbindung 14 elektrisch in Serie geschaltet sind (auch eine Parallelschaltung wäre möglich, nicht gezeigt). Die Verbindung, 14 kann alternativ durch eine Umlenkung des Mittelteiles einer einzigen langen Schraubenfeder gebildet sein. Die Schraubenfedern 8, 9 sind am Ort ihrer Anschlußenden 16, 17 und der Verbindung 14 jeweils mechanisch an den Befestigungselementen 5 festgelegt.

Fig. 2 zeigt den Fall einer Abstandsänderungsmessung zwischen den Teilen 2, 3, welche in Längsrichtung der Schraubenfedern um den Weg Δ1 voneinander entfernt wurden. Die Schraubenfedern 8, 9 der Spule 4 wurden dabei um Δl gedehnt, was gemäß Gleichung (1) zu einer entsprechenden Induktivitätsänderung ΔL führt, die für die Abstandsänderung Δl repräsentativ ist.

Die Erfindung ist nicht auf die dargestellten Ausführungsformen beschränkt, sondern umfaßt alle Varianten und Modifikationen, die in den Rahmen der angeschlossenen Ansprüche fallen.

**Patentansprüche**

1. Vorrichtung (1) zur Messung der Relativlage zweier Teile (2, 3), mit einer verformbaren Spule (4), die mit beiden Teilen (2, 3) in Verbindung steht und sich entsprechend deren Relativlage verformt, wobei die Induktivität (L) der Spule (4) formabhängig und damit ein Maß für die Relativlage ist, **dadurch gekennzeichnet, daß** die Spule (4) über einen ringspulenartig geschlossenen Magnetkreis (7) verfügt.

**2.** Vorrichtung nach Anspruch 1, **dadurch gekennzeichnet, daß** die Spule (4) eine Ringspule ist.

**3.** Vorrichtung nach Anspruch 1, wobei die Spule durch zwei parallele Schraubenfedern gebildet ist, **dadurch gekennzeichnet, daß** die Schraubenfedern (8, 9) an ihren Enden jeweils über eine Brücke (10, 11) aus magnetisch leitendem Material zu dem geschlossenen Magnetkreis (7) verbunden sind.

**4.** Vorrichtung nach einem der Ansprüche 1 bis 3, **dadurch gekennzeichnet, daß** die Enden (14, 16, 17) der Spule (4) mit Befestigungselementen (5) zur Verankerung an den genannten Teilen (2, 3) ausgestattet sind.

**Claims**

**1.** Apparatus (1) for measuring the relative position of two parts (2, 3), having a deformable coil (4) which is connected to both parts (2, 3) and deforms according to their relative position, with the inductance (L) of the coil (4) being form-dependent and thus being a measure of the relative position, **characterized in that** the coil (4) has a magnetic circuit (7) which is closed in the manner of an annular coil.

**2.** Apparatus according to Claim 1, **characterized in that** the coil (4) is an annular coil.

**3.** Apparatus according to Claim 1, wherein the coil is formed by two parallel helical springs, **characterized in that** the helical springs (8, 9) are connected at their ends in each case via a bridge (10, 11) made of magnetically conducting material to form the closed magnetic circuit (7).

**4.** Apparatus according to one of Claims 1 to 3, **characterized in that** the ends (14, 16, 17) of the coil (4) are fitted with fastening elements (5) for anchoring to said parts (2, 3).

**Revendications**

**1.** Dispositif (1) de mesure de la position relative de deux pièces (2, 3), présentant une bobine déformable (4) reliée aux deux pièces (2, 3) qui se déforme en fonction de leur position relative, l'inductance (L) de la bobine (4) dépendant de sa forme et constituant ainsi une mesure de la position relative,
**caractérisé en ce que**
la bobine (4) dispose d'un circuit magnétique (7) fermé, de type en bobine annulaire.

**2.** Dispositif selon la revendication 1, **caractérisé en ce que** la bobine (4) est une bobine annulaire.

**3.** Dispositif selon la revendication 1, dans lequel la bobine est formée par deux ressorts hélicoïdaux parallèles, **caractérisé en ce que** les ressorts hélicoïdaux (8, 9) sont reliés à leurs extrémités au circuit magnétique (7) qui y est raccordé, chaque fois par un pont (10, 11) en un matériau magnétiquement conducteur.

**4.** Dispositif selon l'une des revendications 1 à 3, **caractérisé en ce que** les extrémités (14, 16, 17) de la bobine (4) sont dotées d'éléments de fixation (5) qui permettent d'ancrer la bobine sur lesdites pièces (2, 3).

*Fig.1*

*Fig.2*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1108449
- DE 3205705
- DE 4141545
- DE 19913869